# EUROPEAN PATENT APPLICATION

(11) **EP 4 170 792 A1**
(43) Date of publication of application: **26.04.2023**
(21) Application number: 21880555.4
(22) Date of filing: 14.10.2021
(51) Int. Cl.: H01M 50/24, H01M 50/30, H01M 50/20, H01M 10/658

(54) **BATTERY MODULE AND BATTERY PACK INCLUDING SAME**

(30) Priority: 14.10.2020 KR 20200132685
(71) Applicant: LG Energy Solution, Ltd., Seoul 07335 (KR)
(72) Inventor: LEE, Junghoon, Daejeon 34122 (KR); SEONG, Junyeob, Daejeon 34122 (KR); JUNG, Hyemi, Daejeon 34122 (KR); KIM, Kwangmo, Daejeon 34122 (KR); BYOUN, Dayoung, Daejeon 34122 (KR)
(74) Representative: Goddar, Heinz J.
(86) International application number: PCT/KR2021/014272
(87) International publication number: WO 2022/080908

(57) **Abstract**

A battery module including: a battery cell stack including one or more battery cells, each of the one or more battery cells including electrode leads; a housing for the battery cell stack; and a flame retardant sheet disposed between the battery cell stack and the housing. The flame retardant sheet covers a portion of the battery cell stack excluding a portion of the battery cell stack at a front portion or a rear portion in a longitudinal direction of the battery cell stack.

## Description

### [Cross-Reference to Related Application(s)]

This application claims the benefit of priority based on Korean Patent Applications No. 10-2020-0132685 dated October 14, 2020, the contents of which are incorporated as if fully set forth herein.

### [Technical Field]

The present invention relates to a battery module and a battery pack including the same, and more particularly, to a battery module which is capable of controlling a discharge direction of flames even though thermal runaway occurs, and a battery pack including the same.

### [Background]

In modern society, as the use of portable devices, such as mobile phones, notebook computers, camcorders, and digital cameras, has become commonplace, the development of technologies related to the mobile devices has become active. Further, a rechargeable secondary battery is a measure to solve the air pollution of existing gasoline vehicles that use fossil fuels, and is used as a power source in an Electric Vehicle (EV), a Hybrid Electric Vehicle (HEV), a Plug-in Hybrid Electric Vehicle (P-HEV), and the like, so that the need for development of the secondary battery is increasing.

Currently commercialized secondary batteries include nickel cadmium batteries, nickel hydride batteries, nickel zinc batteries, lithium secondary batteries, and the like, and among them, the lithium secondary battery is in the spotlight for its advantages in that charge and discharge are free because of minimal memory effect, a self-discharge rate is very low, and energy density is very high, compared to the nickel-based secondary battery.

The lithium secondary battery mainly uses a lithium-based oxide and a carbon material as a positive electrode active material and a negative electrode active material, respectively. The lithium secondary battery includes an electrode assembly in which a positive electrode plate and a negative electrode plate, to which the positive electrode active material and the negative electrode active material are applied, respectively, are disposed with a separator interposed therebetween, and an exterior material, that is, a battery case, that seals and accommodates the electrode assembly together with an electrolyte.

In general, the lithium secondary battery may be classified into a can-type secondary battery in which the electrode assembly is embedded in a metal can, and a pouch-type secondary battery in which the electrode assembly is embedded in a pouch of an aluminum laminate sheet, according to a shape of the exterior material.

In the case of the secondary batteries used in small devices, two or three battery cells are disposed, but in the case of the secondary batteries used in medium and large devices, such as automobiles, a battery module in which the plurality of battery cells is electrically connected is used. The plurality of battery cells are connected to each other in series or in parallel to form a cell assembly, so that the battery module has improved capacity and output. Further, one or more battery modules may be mounted together with various control and protection systems, such as a Battery Management System (BMS) and a cooling system to form a battery pack.

In the case where the battery pack is configured by connecting the plurality of battery cells in series/in parallel, the battery module formed of at least one battery cell is first configured, and the battery pack is configured by adding other constituent elements by using at least one battery module, which is a general method. The number of battery modules included in the battery pack or the number of battery cells include in the battery module may be variously set according to an output voltage or charge/discharge capacity required.

In the meantime, in the case where the battery pack is configured by using the plurality of battery modules, when thermal runaway occurs due to an abnormal operation, such as overcharge, high-temperature gas and flame are emitted to the outside of the battery module in some modules among the plurality of battery modules, and when the generated flame is randomly discharged to the outside, it is difficult to control the flame and it is impossible to predict which way the flame is to be discharged, so that there is a problem in that all adjacent mechanic devices may be damaged together.

The above information disclosed in this section is only for enhancement of understanding of the background of the invention, and therefore it may contain information that does not form the prior art that is already known in this country to a person of ordinary skill in the art.

### [Summary]

The present invention has been made in an effort to provide a battery module which is capable of inducing discharge of heat and flame in a specific direction when ignition occurs in the battery module, and a battery pack including the same.

However, the objective to be solved in the exemplary embodiments of the present invention is not limited to the foregoing objective, and may be variously extended in the scope of the technical spirit included in the present invention.

An exemplary embodiment of the present invention provides a battery module, including: a battery cell stack including one or more battery cells including electrode leads, respectively, a housing for accommodating the battery cell stack, and a flame retardant sheet which is disposed between the battery cell stack and the housing and which covers a part of the battery cell stack, in which the flame retardant sheet is disposed so as not to cover a part of the battery cell stack at any one side between a front portion and a rear portion in a longitudinal direction of the battery cell stack.

In a portion completely covered by the flame retardant sheet between the front portion and the rear portion, the flame retardant sheet may include one or more openings opened so as to withdraw the electrode lead to the outside.

The flame retardant sheet may include a flame retardant material including at least one selected from silicon and mica.

The battery module may further include one pair of end plates disposed at the ends in a longitudinal direction of the battery cell stack, in which the flame retardant sheet may be positioned between the end plate and the battery cell stack in a portion completely covered by the flame retardant sheet between the front portion and the rear portion.

In a portion that is not covered by the flame retardant sheet between the front portion and the rear portion, the flame retardant sheet may be not disposed between the end plate and the battery cell stack.

The flame retardant sheet may include a plurality of vent holes in at least a part of the flame retardant sheet.

The plurality of vent holes may be disposed to correspond to an upper surface of the battery cell stack.

When ignition occurs in the battery cell stack, flames may be induced to the front portion or the rear portion which is not covered by the flame retardant sheet.

The battery module may further include a bus bar frame disposed between the flame retardant sheet and the upper surface of the housing and including a bus bar electrically connected with the electrode lead.

Another exemplary embodiment of the present invention provides a battery pack including: said at least one battery module; and a pack case configured to pack at least one battery module.

According to the exemplary embodiments of the present invention, it is possible to provide the battery module which is capable of inducing a discharge of heat and flame in a specific direction when ignition occurs in the battery module, and the battery pack including the same.

### [Brief Description of the Drawings]

FIG. 1 is a perspective view of a battery module according to an exemplary embodiment of the present invention.
FIG. 2 is an exploded perspective view of the battery module of FIG. 1.
FIG. 3 is an illustration of a flame direction when a battery cell stack is combined with a flame retardant sheet in the battery module of FIG. 2.
FIG. 4 is an illustration of a flame direction in the battery module of FIG. 1.
FIG. 5 is an illustration of a battery cell stack combined with a flame retardant sheet in a battery module according to another exemplary embodiment of the present invention.

### [Detailed Description]

Hereinafter, the present invention will be described more fully with reference to the accompanying drawings, in which exemplary embodiments of the invention are shown.

However, the present invention can be variously implemented and is not limited to the following embodiments.

Accordingly, the drawings and description are to be regarded as illustrative in nature and not restrictive. Like reference numerals designate like elements throughout the specification.

In addition, the size and thickness of each configuration shown in the drawings are arbitrarily shown for understanding and ease of description, but the present invention is not limited thereto. In the drawings, the thickness of layers, films, panels, regions, etc., are exaggerated for clarity. In the drawings, for understanding and ease of description, the thickness of some layers and areas is exaggerated.

In addition, it will be understood that when an element such as a layer, film, region, or substrate is referred to as being "on" another element, it can be directly on the other element or intervening elements may also be present. In contrast, when an element is referred to as being "directly on" another element, there are no intervening elements present. Further, in the specification, the word "on" means positioning on or below the object portion, but does not essentially mean positioning on the upper side of the object portion based on a gravity direction.

In addition, unless explicitly described to the contrary, the word "comprise", and variations such as "comprises" or "comprising", will be understood to imply the inclusion of stated elements but not the exclusion of any other elements.

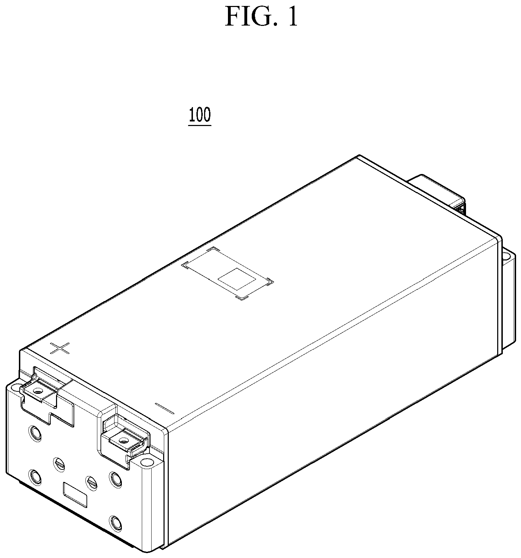

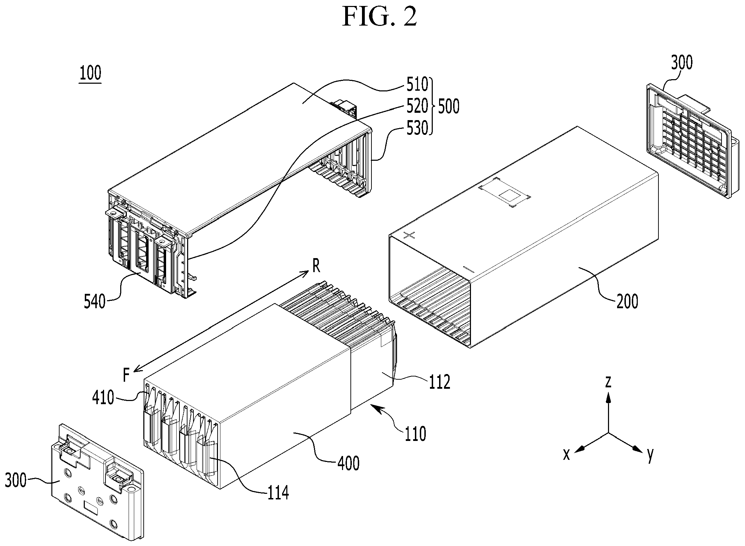

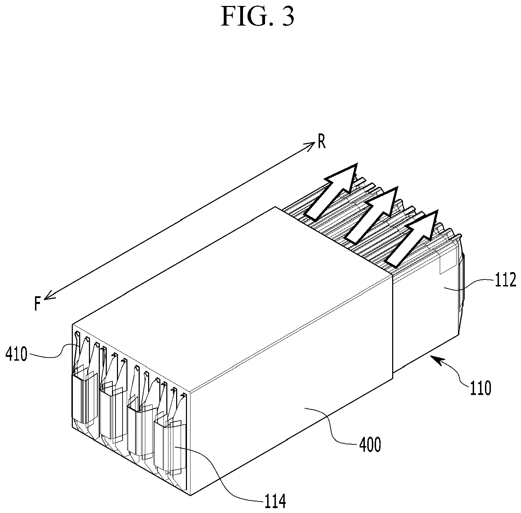

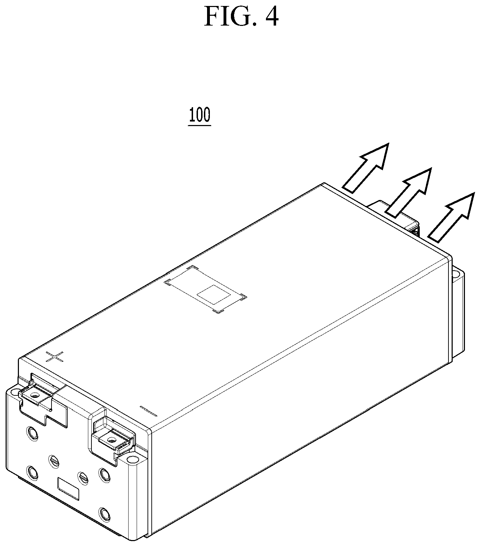

FIG. 1 is a perspective view of a battery module according to an exemplary embodiment of the present invention, FIG. 2 is an exploded perspective view of the battery module of FIG. 1, FIG. 3 is an illustration of a flame direction when a battery cell stack is combined with a flame retardant sheet in the battery module of FIG. 2, and FIG. 4 is in illustration of a flame direction in the battery module of FIG. 1.

As illustrated in FIGS. 1 to 4, a battery module 100 according to an exemplary embodiment of the present invention includes a battery cell stack 110 including one or more battery cells, a housing 200 for accommodating the battery cell stack 110, and a pair of end plates 300 positioned at both ends of the battery cell stack 110 in a longitudinal direction and coupled to openings of the housing 200.

The battery cell stack 110 is an assembly of secondary batteries including a plurality of battery cells 112. The battery cell stack 110 may include a plurality of battery cells 112, and each battery cell 112 includes an electrode lead 114. The batter cells 112 may be the pouch-type battery cell having a plate shape, but is not limited thereto. The electrode lead 114 is a positive electrode lead or a negative electrode lead, and an end of the electrode lead 114 of each battery cell 112 may be bent in one direction, and thus, may be in contact with an end of the electrode lead of another adjacent battery cell 112. The two electrode leads 114 which are in contact with each other may be fixed by welding and the like, and thus, the battery cells 112 inside the battery cell stack 110 may be electrically connected.

Further, a bus bar frame 500 accommodated in the housing 200 may be provided together with the battery cell stack 110. The bus bar frame 500 may include an upper frame 510 positioned on an upper portion of the battery cell stack 110, a front fame 520 positioned on a front surface of the battery cell stack 110, and a rear frame 530 positioned on a rear surface of the battery cell stack 110. A bus bar 540 connected with the electrode leads 114 of the battery cells configuring the battery cell stack 110 may be mounted to the front frame 520 and the rear frame 530. In this case, a flame retardant sheet 400, which is to be described below, may be coupled to the bus bar frame 500 in the state of being formed to cover a part of the battery cell stack 110. Accordingly, the upper frame 510 of the bus bar frame 500 is disposed on the flame retardant sheet 400, and the front frame 520 is disposed to cover one end of the battery cell stack 110 covered by the flame retardant sheet 400. Particularly, in this case, the bus bar 540 disposed in the front frame 520 may be coupled with the electrode lead 114 withdrawn to the outside through an opening 410 of the flame retardant sheet 400.

The plurality of battery cells 112 are vertically stacked so that the electrode leads 114 are aligned in one direction to form the battery cell stack 110. The battery cell stack 110 is accommodated in the housing 200 including at least one opening opened in the longitudinal direction of the battery cell stack 110. In this case, the electrode leas 114 are withdrawn to the outside of the housing 200 through the opening, and the withdrawn electrode leads 114 are coupled to the front frame 520 and the rear frame 530 of the bus bar frame 500, respectively, to be electrically connected with the mounted bus bar 540. Herein, the bus bar frame 500 may be made of an insulating material, for example, non-conductive synthetic resin, and the bus bar 540 may be made of a conductive metal material.

The battery module 100 may include a Flexible Printed Circuit Board (FPCB) (not illustrated) which is extended and mounted in the longitudinal direction of the housing 200 in the upper portion of the battery cell stack 110 to sense the battery cells 112. Further, the battery module 100 may include various electronic components, for example, an Internal Circuit Board (ICB) and a Battery Management System (BMS). The electronic components, such as the ICB and the BMS board, may be electrically connected with the plurality of battery cells 112.

In the battery module 100 according to the present exemplary embodiment, the housing 200 may be formed to cover four surfaces, except for both side ends, of the battery cell stack 110. That is, in FIG. 2, the battery cell stack 110 may have an upper surface and a bottom surface in the upper portion and the lower portion in the z-axis direction, respectively, and an upper surface of the housing 200 may be located at a position corresponding to the upper surface of the battery cell stack 110 and a lower surface of the housing 200 may be located at a position corresponding to the bottom surface, and one pair of side surfaces corresponding to the side surfaces of the battery cell stack 110 may be located between the upper surface and the lower surface. In this case, the housing 200 may have a rectangular tube shape as illustrated in FIG. 2, but is not limited thereto, and may also have a structure in which a U-shape frame formed of the lower surface and one pair of side surfaces that are vertically coupled to both sides of the lower surface is coupled with an upper plate that is coupled to the U-shape frame to form the upper surface. In addition, the housing may have a structure in which an inverted U-shaped frame formed of the upper surface and both side surfaces is coupled with a lower plate forming the lower surface, but is not particularly limited.

The housing 200 may be made of a metal material. The metal material may be one or more selected from steel and aluminum. End plates 300 are coupled to both opened ends of the housing 200, respectively. The end plates 300 may be made of a metal material so as to have strength to protect the components, such as the battery cell stack 110 and the bus bar frame 500, inside thereof. The end plates 300 made of the metal material may be coupled to the housing 200 which is also made of the metal material, by a method of welding and the like.

In the meantime, the flame retardant sheet 400 is included between the battery cell stack 110 and the housing 200. The flame retardant sheet 400 may be formed to cover one side and not to cover the remaining side in the longitudinal direction of the battery cell stack 110, that is, the longitudinal direction having a front portion and a rear portion indicated by F and R as the direction parallel to the y-axis direction in FIG. 2. In the present exemplary embodiment, FIG. 2 illustrates the configuration in which the flame retardant sheet 400 covers the front portion F, but the present invention is not limited thereto, and the flame retardant sheet 400 may cover the rear portion R, and the battery cell stack 110 may be configured so that the direction through which the generated flame is to be discharged is exposed, that is, so as not to be covered by the flame retardant sheet 400, which is to be described below.

In the portion covered by the flame retardant sheet 400, that is, the front portion F of FIG. 2, the flame retardant sheet 400 is formed to cover the portion facing the end plate 300, as well as the upper surface, the lower surface, and the side surfaces of the battery cell stack 110. Accordingly, the front portion F may be in the state where the flame retardant sheet 400 is disposed between the end plate 300 and the battery cell stack 110. In this case, one or more opened openings 410 may be formed in the flame retardant sheet 400 to correspond to the positions of the electrode leads 114 to withdraw the electrode lead 114 included in the battery cell 112 to the outside.

In the portion which is not covered by the flame retardant sheet 400, that is, the rear portion R of FIG. 2, parts of the upper surface, the lower surface, and the side surfaces of the battery cell stack 110 are formed not to be covered by the flame retardant sheet 400, and thus, the portion facing the end plate 300 is naturally formed not to be covered. That is, the length (F-R direction) of the flame retardant sheet 400 is formed to be shorter than the length of the battery cell stack 110 to have a structure of which one end is opened, so that when the battery cell stack 110 is accommodated in the flame retardant sheet 400, a part of the battery cell stack 110 is exposed along a circumference of the flame retardant sheet 400 in the rear portion R as illustrated in FIG. 2. When the battery module 100 is manufactured, after the flame retardant sheet 400 is covered on the battery cell stack 110, the flame retardant sheet 400 is coupled with the bus bar frame 500 described above and the electrode lead 114 and the bus bar 540 are welded.

The flame retardant sheet 400 may be formed of a thin sheet made of a flame retardant material. In this case, the flame retardant material may include at least one selected from silicon and mica. However, the flame retardant material is not limited thereto, and any commercially available material that has flame retardancy and is processible into a sheet shape may be appropriately selected and used.

The portion covered by the flame retardant sheet 400 made of the flame retardant material may block flame from spreading to a corresponding portion when the flame is generated inside the battery cell stack 110. That is, as illustrated in FIGS. 3 and 4, flames and venting gas generated in the battery cell stack 110 are discharged to the portion, that is, the rear portion R, that is not covered by the flame retardant sheet 400, thereby preventing the flames and the venting gas from being randomly discharged to the outside and instead being induced and discharged in one direction. By the foregoing configuration, it is possible to induce the direction of the flames and the venting gas in a predetermined direction, in the battery pack and the device in which the battery module 100 is disposed, the discharge direction is directed toward a place where there are relatively few adjacent modules or components, so that even though ignition starts in any one module, it is possible to prevent the flame from spreading to other adjacent modules or devices as much as possible. Further, even though another module or component is present in the discharge direction, the discharge of the flame and the venting gas is induced only in one direction, so that it is possible to prevent and delay the damage of the module disposed in another direction as much as possible. Accordingly, it is possible to improve safety of the battery module 100 and the battery pack including the same by controlling the flame direction in the battery module 100.

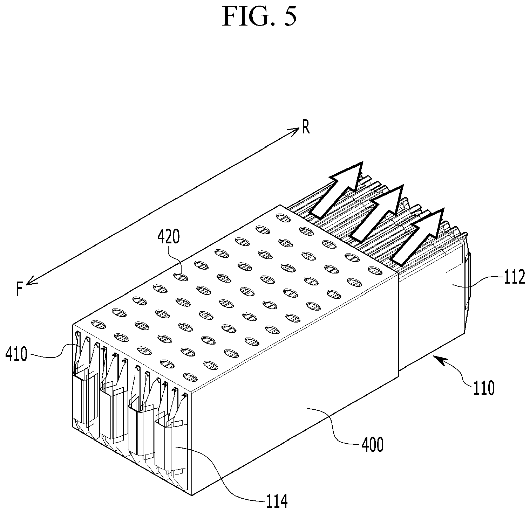

Next, another exemplary embodiment of the present invention will be described with reference to FIG. 5.

FIG. 5 is an illustration of a battery cell stack combined with a flame retardant sheet in a battery module according to another exemplary embodiment of the present invention.

The exemplary embodiment of FIG. 5 differs only in the shape of the flame retardant sheet 400 compared to the foregoing exemplary embodiment, and the rest are the same, so that the descriptions of the same parts will be omitted.

As illustrated in FIG. 5, in another exemplary embodiment of the present invention, a plurality of vent holes 420 is included in at least a part of a flame retardant sheet 400. More particularly, the plurality of vent holes 420 may be disposed to correspond to an upper surface of a battery cell stack 110. Further, the plurality of vent holes 420 is illustrated in a circular shape, but the shape is not particularly limited. As illustrated in FIG. 5, the plurality of vent holes 420 may be formed to correspond to the entire upper surface of the battery cell stack 110, but is not limited thereto, and may also be formed to correspond to a part of the upper surface of the battery cell stack 110. Further, as illustrated in FIG. 5, the plurality of vent holes 420 may be regularly arranged in rows, but is not limited thereto, and the plurality of vent holes 420 may also be randomly arranged and formed.

Through the vent holes 420 provided, the flames and gas that may be additionally accumulated in the flame retardant sheet 400 may be discharged separately from the discharge of the flames and the gas to the rear portion R in which the flame retardant sheet 400 is not formed. That is, through this, it is possible to prevent the flame from accumulating inside the flame retardant sheet 400, thereby preventing an explosive heat conduction phenomenon. Accordingly, it is possible to further improve safety of the battery module 100.

As described above, according to the exemplary embodiments of the present invention, it is possible to induce the direction of the flames and venting gas in a predetermined direction by the flame retardant sheet 400 that covers only a part of the battery cell stack 110, so that in the battery pack and the device in which the battery module 100 is disposed, the discharge direction is directed toward a place where there are relatively few adjacent modules or components, so that even though ignition starts in any one module, it is possible to prevent the flame from spreading to other adjacent modules or devices as much as possible. Further, even though another module or component is present in the discharge direction, the discharge of the flames and the venting gas is induced only in one direction, so that it is possible to prevent and delay the damage of the module disposed in another direction as much as possible. Accordingly, it is possible to improve safety of the battery module 100 and the battery pack including the same by controlling the flame direction in the battery module 100. Further, by the plurality of vent holes 420 provided in the flame retardant sheet 400, it is possible to prevent flame from accumulating inside the flame retardant sheet 400, thereby preventing an explosive heat conduction phenomenon.

In the meantime, the battery module according to the exemplary embodiment of the present invention may be packed in one or more pack cases to form a battery pack.

The battery module and the battery pack including the same described above may be applied to various devices. As the device, transport means, such as an electric bicycle, an electric vehicle, and a hybrid vehicle, are applicable, but the present invention is not limited thereto, and the present invention is applicable to various devices capable of using a battery module and a battery pack including the same, which also belongs to the scope of the present invention.

Although an exemplary embodiment of the present invention has been described in detail, the scope of the present invention is not limited by the embodiment. Various changes and modifications using the basic concept of the present invention defined in the accompanying claims by those skilled in the art shall be construed to belong to the scope of the present invention.

## Claims

1. A battery module, comprising:
a battery cell stack including one or more battery cells, each of the one or more battery cells including electrode leads,
a housing for the battery cell stack, and
a flame retardant sheet disposed between the battery cell stack and the housing,
wherein the flame retardant sheet covers a portion of the battery cell stack excluding a portion of the battery cell stack at a front portion or a rear portion in a longitudinal direction of the battery cell stack.

2. The battery module of claim 1, wherein:
the flame retardant sheet includes one or more openings in the portion of the battery cell stack covered by the flame retardant sheet, and
the electrode leads extend through the one or more openings to the outside.

3. The battery module of claim 1, wherein:
the flame retardant sheet includes a flame retardant material, and
the flame retardant material includes at least one selected from silicon and mica.

4. The battery module of claim 1, further comprising:
a pair of end plates disposed at respective ends in a longitudinal direction of the battery cell stack,
wherein the flame retardant sheet is positioned between the end plate and the battery cell stack in the portion of the battery cell stack covered by the flame retardant sheet.

5. The battery module of claim 4, wherein:
the flame retardant sheet is not disposed between the end plate and the battery cell stack in the front portion or the rear portion of the battery cell stack not covered by the flame retardant sheet.

6. The battery module of claim 1, wherein:
the flame retardant sheet includes a plurality of vent holes in at least a portion of the flame retardant sheet.

7. The battery module of claim 6, wherein:
the plurality of vent holes are disposed in the portion of the flame retardant sheet adjacent to an upper surface of the battery cell stack.

8. The battery module of claim 1, wherein:
the battery module induces flames produced during ignition in the battery cell stack to travel to the front portion or the rear portion of the battery cell stack that is not covered by the flame retardant sheet.

9. The battery module of claim 1, further comprising:
a bus bar frame disposed between the flame retardant sheet and an upper surface of the housing and electrically connected with the electrode leads.

10. A battery pack, comprising:
at least one battery module of claim 1, and
a pack case for the at least one battery module.
